(19) **Europäisches Patentamt**
**European Patent Office**
**Office européen des brevets**

(11) **EP 3 676 166 B1**

(12) **FASCICULE DE BREVET EUROPEEN**

(45) Date de publication et mention
de la délivrance du brevet:
**20.04.2022 Bulletin 2022/16**

(21) Numéro de dépôt: **18762085.1**

(22) Date de dépôt: **30.08.2018**

(51) Classification Internationale des Brevets (IPC):
***B62M 6/50*** *(2010.01)* ***B62M 6/55*** *(2010.01)*
***B62M 11/14*** *(2006.01)*

(52) Classification Coopérative des Brevets (CPC):
**B62M 6/55; B62M 11/145;** B62M 6/50

(86) Numéro de dépôt international:
**PCT/EP2018/073399**

(87) Numéro de publication internationale:
**WO 2019/043123 (07.03.2019 Gazette 2019/10)**

(54) **GROUPE MOTOPROPULSEUR**

ANTRIEBSSTRANG

POWER TRAIN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.08.2017 BE 201705605**

(43) Date de publication de la demande:
**08.07.2020 Bulletin 2020/28**

(73) Titulaire: **E2 Drives SA**
**1332 Genval (BE)**

(72) Inventeurs:
• **DELEVAL, Arthur**
**3090 Overijse (BE)**
• **GODFRIND, Simon**
**1050 Ixelles (BE)**

(74) Mandataire: **Gevers Patents**
**Intellectual Property House**
**Holidaystraat 5**
**1831 Diegem (BE)**

(56) Documents cités:
**EP-A1- 2 841 328      EP-A1- 2 924 317**
**WO-A1-2016/034574    DE-A1-102017 201 325**

## Description

### Domaine technique

La présente invention concerne un groupe motopropulseur pour véhicule à pédales, en particulier pour vélo ou vélo électrique.

### Art antérieur

Le document WO2016/034574 décrit un groupe motopropulseur pour vélo comprenant un train épicycloïdal, un axe de pédalier, un plateau de sortie, un premier moteur et un deuxième moteur. Le train épicycloïdal comprend une couronne, un planétaire et un porte-satellite.

Dans ce groupe motopropulseur, le porte-satellite comprend des doubles satellites, ce qui est complexe à fabriquer, à monter et onéreux.

Le document DE102017201325A1 montre aussi un groupe motopropulseur pour un véhicule à pédales et comprenant:

un axe de pédalier agencé de façon à tourner autour d'un premier axe de rotation,
un plateau de sortie agencé de façon à tourner autour du premier axe de rotation,
un premier moteur, un deuxième moteur (38),
un train épicycloïdal comprenant un premier élément d'engrenage, un deuxième élément d'engrenage et un planétaire, l'axe de pédalier et le deuxième moteur (38) étant reliés au train épicycloïdal via le premier élément d'engrenage de façon à former une première entrée du train épicycloïdal, le premier moteur étant relié au train épicycloïdal via le planétaire de façon à former une deuxième entrée du train épicycloïdal, le deuxième élément d'engrenage reliant le train épicycloïdal au plateau de sortie de façon à former une sortie du train épicycloïdal,
le premier élément d'engrenage, le deuxième élément d'engrenage et le planétaire sont agencés de façon à tourner autour d'un même deuxième axe de rotation différent du premier axe de rotation

### Résumé de l'invention

Un des buts de l'invention est de fournir un groupe motopropulseur pour véhicule à pédales simple de fabrication, léger, robuste, de faible encombrement.

A cet effet, l'invention propose, un groupe motopropulseur pour un véhicule à pédales et comprenant:

- un axe de pédalier agencé de façon à tourner autour d'un premier axe de rotation,
- un plateau de sortie agencé de façon à tourner autour du premier axe de rotation,
- un premier moteur,
- un deuxième moteur,
- un train épicycloïdal comprenant un premier élément d'engrenage, un deuxième élément d'engrenage et un planétaire,

l'axe de pédalier et le deuxième moteur étant reliés au train épicycloïdal via le premier élément d'engrenage de façon à former une première entrée du train épicycloïdal,

le premier moteur étant relié au train épicycloïdal via le planétaire de façon à former une deuxième entrée du train épicycloïdal,
le deuxième élément d'engrenage reliant le train épicycloïdal au plateau de sortie de façon à former une sortie du train épicycloïdal,
dans lequel le premier élément d'engrenage, le deuxième élément d'engrenage et le planétaire sont agencés de façon à tourner autour d'un même deuxième axe de rotation différent du premier axe de rotation.

Dans le groupe motopropulseur selon l'invention, le premier élément d'engrenage, le deuxième élément d'engrenage et le planétaire ont un axe de rotation décalé spatialement de l'axe de rotation de l'axe du pédalier et du plateau de sortie. Cela permet que la taille du planétaire soit indépendante du diamètre de l'axe du pédalier. Cela permet alors d'installer un planétaire de plus petit diamètre et donc d'augmenter la raison du train épicycloïdal. Il est donc possible d'obtenir une raison suffisante pour le train épicycloïdal sans utiliser de satellites doubles. Cela permet que le groupe motopropulseur soit plus facile à fabriquer, à monter et revienne moins cher.

Le groupe motopropulseur selon l'invention permet aussi d'obtenir un grand rapport de réduction entre le premier moteur et le plateau de sortie. En effet, ce rapport de réduction dépend de la raison du train épicycloïdal et du rapport de réduction entre le deuxième élément d'engrenage et le plateau de sortie.

Un avantage du groupe motopropulseur est qu'il permet de placer une démultiplication entre l'axe du pédalier et le premier élément d'engrenage du train épicycloïdal. Tous les éléments du train épicycloïdal tournent donc plus vite et avec moins de couple. Cela diminue les contraintes mécaniques qu'ils subissent.

Un autre avantage du groupe motopropulseur selon l'invention est qu'il est possible de placer facilement un capteur de position au centre de l'axe du premier moteur car celui-ci est différent de l'axe du pédalier.

Un autre avantage du groupe motopropulseur selon l'invention est que le premier moteur peut être relativement simple car son axe est différent de l'axe du pédalier.

Un autre avantage du groupe motopropulseur selon l'invention est qu'il combine une assistance électrique et une boite de vitesse automatique dans un même boitier.

Un autre avantage du groupe motopropulseur selon l'invention est qu'il fournit un rapport de transmission variable de façon continue.

Le fait que l'axe du pédalier et le plateau de sortie aient le même axe de rotation permet que l'axe de pédalier ne soit pas dans le chemin de la chaine qui relie le plateau de sortie à la roue arrière. Cela permet que la chaine soit courte. Cela donne aussi une grande latitude par rapport au positionnement du groupe motopropulseur sur le véhicule à pédales. Cela permet en outre de minimiser l'espace entre l'axe de pédalier et la roue arrière ce qui procure une meilleure maniabilité au véhicule à pédales.

De préférence, le groupe motopropulseur comprend au moins un des éléments de mesure suivants:

- un élément de mesure de position angulaire du premier moteur,
- un élément de mesure de position angulaire du deuxième moteur,
- un élément de mesure de courant du premier moteur, et
- un élément de mesure de courant du deuxième moteur.

De préférence, le groupe motopropulseur comprend une unité de contrôle connectée au premier moteur, au deuxième moteur, et agencée pour contrôler le premier moteur et le deuxième moteur, préférentiellement sur base de la position angulaire du premier moteur, de la position angulaire du deuxième moteur, du courant du premier moteur et du courant du deuxième moteur, l'unité de contrôle étant agencée pour contrôler le deuxième moteur selon un contrôle en courant ou en couple et pour contrôler le premier moteur selon un contrôle en position angulaire ou en vitesse angulaire.

Il est intéressant de noter qu'il n'y a pas de différence fondamentale entre un contrôle en position et un contrôle un vitesse car il existe un lien mathématique direct entre les deux valeurs. La vitesse angulaire est la dérivée temporelle de la position angulaire. Par exemple, contrôler un moteur pour qu'il tourne à une vitesse angulaire constante revient à contrôler un moteur pour qu'il suive une position angulaire évoluant linéairement en fonction du temps.

De préférence, le premier axe de rotation et le deuxième axe de rotation sont parallèles. De préférence, l'axe de rotation du deuxième moteur leur est aussi parallèle.

Dans le cadre du présent document, deux éléments connectés ou reliés peuvent être connectés ou reliés directement ou indirectement. Ils peuvent, par exemple, être engrenés directement ou indirectement via au moins une roue dentée intermédiaire, une courroie et/ou un galet.

Dans le cadre du présent document, les termes « entrée » et « sortie » doivent être compris dans le sens d'une entrée et d'une sortie dans une chaine cinématique. Une entrée est préférentiellement une entrée en puissance mécanique et une sortie est préférentiellement une sortie en puissance mécanique.

Dans le cadre du présent document, la raison du train épicycloïdal est le rapport de réduction du train épicycloïdal. Dans le cas d'un train épicycloïdal avec des satellites simples, c'est le rapport entre le diamètre de la couronne et le diamètre du planétaire.

Dans le cadre du présent document, un véhicule à pédales peut par exemple être un vélo, un vélomoteur, un tricycle.

Dans le cadre du présent document, un élément d'engrenage peut par exemple être une roue dentée ou une pluralité de roues dentées couplées mécaniquement ou engrenées entre elles.

Dans le cadre du présent document, un élément "agencé de façon à tourner autour d'un axe de rotation" est de préférence un élément essentiellement symétrique autour de cet axe.

Dans le cadre du présent document, un "rapport fixe" entre deux objets signifie que leurs vitesses de rotation sont dans un rapport constant.

Dans le cadre du présent document, le « rapport de vitesse du groupe motopropulseur » désigne le rapport de vitesse existant entre l'axe de pédalier et le plateau de sortie.

Dans le cadre du présent document, le« niveau d'assistance du groupe motopropulseur » désigne la portion de puissance donnée par l'assistance électrique par rapport à la puissance donnée par le cycliste. Il peut être calculé comme étant la puissance de l'ensemble des deux moteurs divisée par la somme de la puissance de l'ensemble des deux moteurs et de la puissance du cycliste. Il peut aussi être appelé « paramètre de niveau d'assistance ». C'est un paramètre qui peut être commandé manuellement par le cycliste via une interface de contrôle ou calculé automatiquement par l'unité de contrôle en fonction d'autres paramètres.

Dans le cadre du présent document, un satellite double comprend une grande roue dentée et une petite roue dentée qui sont fixées de manière concentrique et solidaire.

Dans le cadre du présent document, une mesure de position angulaire est équivalente à une mesure de vitesse angulaire. En effet, le groupe motopropulseur selon l'invention comprend de préférence un moyen pour déterminer la vitesse angulaire d'un des moteurs à partir de la position angulaire de ce moteur.

Dans le cadre du présent document, une mesure de courant est équivalente à une mesure de couple. En effet, le groupe motopropulseur selon l'invention comprend de préférence un moyen pour déterminer le couple d'un des moteurs à partir du courant fourni à ce moteur.

Le train épicycloïdal comprend une couronne, un porte-satellite et un planétaire. Le porte-satellite comprend des satellites. Le planétaire peut également être appelé planétaire intérieur ou soleil. La couronne peut également être appelée planétaire extérieur. Le planétaire et la couronne sont préférentiellement reliés via les satellites.

De préférence, le porte-satellite ne comprend que des satellites simples. En effet, le groupe motopropulseur selon l'invention permet d'éviter l'usage de doubles satellites.

Le premier moteur comprend un rotor et un stator. Le deuxième moteur comprend un rotor et un stator. Le rotor du premier moteur est relié au train épicycloïdal via le planétaire. Le rotor du deuxième moteur est relié au train épicycloïdal via le premier élément d'engrenage.

De préférence, le rotor du premier moteur est agencé pour tourner selon le deuxième axe de rotation. De préférence, le rotor du deuxième moteur est agencé pour tourner selon un troisième axe de rotation, qui est différent du premier axe de rotation et du deuxième axe de rotation.

De préférence, le groupe motopropulseur comprend une carte de circuit imprimé sur laquelle est disposée l'unité de contrôle.

De préférence, le groupe motopropulseur comprend une ou plusieurs batteries.

De préférence, le plateau de sortie est fixé à un arbre creux disposé autour de l'axe de pédalier et coaxial à l'axe du pédalier.

Dans un mode de réalisation de l'invention, le plateau de sortie est relié, de préférence par une chaine, un cardan ou une courroie, à un pignon d'une roue arrière du véhicule à pédales.

La rotation de l'axe du pédalier provient du mouvement de pédalage d'un cycliste utilisant le véhicule à pédales. L'utilisation d'un train épicycloïdal prenant en entrée l'axe du pédalier permet un changement du rapport de vitesse entre la rotation fournie par le cycliste et la rotation du plateau de sortie.

Dans un mode de réalisation de l'invention, le premier moteur a pour rôle de gérer le rapport de vitesse du groupe motopropulseur. Une de ses fonctions est d'offrir un rapport de transmission donné. Ce rapport de transmission est le rapport entre la vitesse angulaire de l'axe du pédalier et la vitesse angulaire du plateau de sortie. Ce rapport de transmission peut par exemple être déterminé sur base d'un paramètre de rapport de vitesses fourni par l'utilisateur du véhicule à pédale ou déterminé par l'unité de contrôle afin d'offrir un changement de vitesse automatique au cycliste . Cette détermination peut notamment être réalisée par un algorithme de passage de vitesses. Le premier moteur est de préférence contrôlé en position angulaire ou en vitesse angulaire, par exemple via l'unité de contrôle qui contrôle le premier moteur de telle sorte qu'une consigne de position angulaire ou de vitesse angulaire soit respectée.

Dans un mode de réalisation de l'invention, le deuxième moteur a pour rôle de gérer le bon niveau d'assistance du groupe motopropulseur. Une de ses fonctions est d'assister le mouvement du cycliste en ajoutant du couple sur le pédalier. De préférence, le niveau d'assistance est déterminée par l'unité de contrôle sur base notamment d'un paramètre de niveau d'assistance. Le paramètre de niveau d'assistance peut être déterminé par l'utilisateur ou de façon automatique par l'unité de contrôle du groupe motopropulseur. Il est préféré que le niveau d'assistance soit indépendant du rapport de vitesse du groupe motopropulseur. Le deuxième moteur est de préférence contrôlé en courant ou en couple, par exemple via l'unité de contrôle qui contrôle le deuxième moteur de telle sorte qu'une consigne de courant ou de couple soit respectée.

De préférence, l'unité de contrôle est connectée électriquement à l'élément de mesure d'une position angulaire du premier moteur, à l'élément de mesure d'une position angulaire du deuxième moteur, à l'élément de mesure d'un courant fourni au premier moteur, et à l'élément de mesure d'un courant fourni au deuxième moteur.

Le contrôle des premier et deuxième moteurs peut par exemple être réalisé de la façon suivante dans le premier mode de réalisation de l'invention.

La vitesse angulaire de la roue arrière du vélo $\omega_R$ est proportionnelle à la vitesse angulaire du plateau de sortie $\omega_{plat}$ :

$$\omega_R = R_R . \omega_{plat}$$

Avec $R_R$ le rapport de transmission entre la vitesse angulaire de la roue arrière du vélo et la vitesse angulaire du plateau de sortie.

La vitesse angulaire du plateau de sortie est donnée par

$$\omega_{plat} = \frac{1}{R_{out}}\left(\frac{\omega_{M1} + R.R_C.\omega_{ped}}{R+1}\right)$$

Où $R_{out}$ est le rapport entre le porte-satellite et le plateau de sortie, $R_C$ est le rapport entre l'axe de pédalier et la couronne, $\omega_{M1}$ est la vitesse angulaire du premier moteur, $\omega_{ped}$ est la vitesse angulaire du pédalier et R est le rapport de réduction du train épicycloïdal.

La vitesse angulaire du pédalier peut être déterminée à partir de la vitesse angulaire mesurée du deuxième moteur $\omega_{M2}^{mes}$ par

$$\omega_{ped} = \frac{\omega_{M2}^{mes}}{R_{M2}.R_C}$$

Où $R_{M2}$ est le rapport de réduction entre le deuxième moteur et la couronne.

L'unité de contrôle se base sur un paramètre de rapport de vitesse GC (pour Gear Coefficient en anglais) et sur la vitesse angulaire mesurée du deuxième moteur $\omega_{M2}^{mes}$ pour déterminer la vitesse angulaire imposée au premier moteur $\omega_{M1}^{cons}$

$$\omega_{M1}^{cons} = GC.\omega_{ped}.R_C = GC.\frac{\omega_{M2}^{mes}}{R_{M2}}$$

afin que la vitesse angulaire de la roue arrière soit proportionnelle à la vitesse angulaire du pédalier quand le paramètre GC est constant

$$\omega_R = \frac{R_R}{R_{out}}.\frac{\omega_{M1}^{cons} + R.R_C.\omega_{ped}}{R+1} = \frac{R_R}{R_{out}}.\frac{GC.\frac{\omega_{M2}^{mes}}{R_{M2}} + R.R_C.\omega_{ped}}{R+1}$$

$$= \frac{R_R}{R_{out}}.\frac{GC.R_C.\omega_{ped} + R.R_C.\omega_{ped}}{R+1} = \frac{R_R.R_C}{R_{out}}.\left(\frac{GC+R}{R+1}\right).\omega_{ped}$$

$\omega_{M1}^{cons}$ est donc une consigne de vitesse angulaire imposée au premier moteur. De la même manière, il est possible de contrôler le premier moteur en position en lui assignant une consigne de position valant simplement l'intégrale cette consigne de vitesse $\omega_{M1}^{cons}$.

Le couple du premier moteur $C_{M1}$ est donné par

$$C_{M1} = \frac{C_{ped}}{R.R_c} = \frac{C_{plat}}{(R+1).R_{out}}$$

Où $C_{ped}$ est le couple du pédalier et $C_{plat}$ est le couple du plateau de sortie.

On peut considérer un paramètre de niveau d'assistance AF (pour Assistance Factor en anglais), par exemple égale au rapport de l'énergie électrique sur l'énergie totale fournie au plateau de sortie

$$AF = \frac{P_{M1} + P_{M2}}{P_{M1} + P_{M2} + P_{humain}}$$

En prenant en compte que la puissance vaut le couple multipliée par la vitesse angulaire, il est possible de déterminer le couple du deuxième moteur qui est adéquat pour atteindre le paramètre de niveau d'assistance désiré, sur base du couple du premier moteur $C_{M1}$, par l'équation

$$AF = \frac{GC + \frac{R_{M2}.C_{M2}}{C_{M1}}}{GC + R}$$

$$=> C_{M2}^{cons} = \frac{C_{M1}^{mes}.(AF(GC + R) - GC)}{R_{M2}}$$

$C_{M2}^{cons}$ est donc une consigne de couple ou de courant imposée au deuxième moteur.

De préférence, le contrôle des moteurs est un contrôle avec retour d'information, aussi appelé contrôle en boucle fermée (feed back control en anglais).

Le groupe motopropulseur selon l'invention peut fonctionner en frein à rétropédalage, ce qui permet de récupérer l'énergie de freinage pour recharger la batterie. De préférence, le groupe motopropulseur est alors agencé de façon à ce que la roue arrière soit capable d'entrainer la chaine pour transmettre le mouvement sur le plateau de sortie. Cela peut par exemple se faire en installant le pignon de la roue arrière de manière fixe sur un moyeu de la roue arrière. Par conséquent, si le véhicule à pédale descend une pente, la chaine tourne en entrainant le plateau de sortie. Cela aura pour conséquence de faire tourner le premier moteur et/ou le pédalier dans le sens normal de fonctionnement. Si le cycliste désire freiner, il peut actionner le pédalier en arrière, c'est-à-dire dans le sens inverse au sens au sens normal de fonctionnement. La position du pédalier peut être déterminée par l'élément de mesure d'une position angulaire du deuxième moteur, par exemple grâce au deuxième capteur. De préférence, le deuxième moteur n'est alors pas contrôlé par l'unité de contrôle. De préférence, le premier moteur est contrôlé en couple ou en courant, avec une consigne de couple négative qui correspond au fait que le moteur agisse en générateur. Cette consigne de couple négative est de préférence proportionnelle à un angle négatif effectué par le pédalier. La mesure de cette angle est mise à zéro au moment où le cycliste actionne le pédalier en arrière. Ainsi, au moment où le cycliste actionne le pédalier en arrière, le premier moteur commence à freiner le vélo. Le cycliste sent donc un couple proportionnel au couple de freinage du premier moteur, tendant à faire revenir le pédalier en avant. Il s'agit donc d'un système stable. Plus le cycliste pousse en arrière, plus le premier moteur freine. Si le cycliste relâche la pression vers l'arrière du pédalier, le pédalier revient en avant et le premier moteur cesse de freiner le vélo. Si le plateau de sortie est relié au porte-satellite, ce dernier agit comme un différentiel. Il a donc tendance à faire tourner le premier moteur dans le sens normal de fonctionnement. Le premier moteur est à ce moment contrôlé comme un générateur pour freiner le vélo et transmettre ainsi de la puissance vers la batterie. Ce système peut par exemple être activé par un rétropédalage, comme le système torpédo. La puissance du frein et donc la quantité d'énergie fournie à la batterie peut être contrôlée en fonction de la force de rétropédalage que le cycliste exerce.

Dans un premier mode de réalisation de l'invention, le premier élément d'engrenage est une couronne du train épicycloïdal et le deuxième élément d'engrenage est un porte-satellite du train épicycloïdal.

Selon ce mode de réalisation, l'axe du pédalier est relié, de préférence avec un rapport fixe, à la couronne; le rotor du deuxième moteur est relié, de préférence avec un rapport fixe, à la couronne; le rotor du premier moteur est relié, de préférence avec un rapport fixe, au planétaire; le planétaire et la couronne forment deux entrées du train épicycloïdal; le porte-satellite forme une sortie du train épicycloïdal; le porte-satellite est relié, de préférence avec un rapport fixe, au plateau de sortie.

Dans un deuxième mode de réalisation de l'invention, le premier élément d'engrenage est un porte-satellite du train épicycloïdal et le deuxième élément d'engrenage est une couronne du train épicycloïdal.

Selon ce mode de réalisation, l'axe de pédalier est relié, de préférence avec un rapport fixe, au porte-satellite; le rotor du deuxième moteur est relié, de préférence avec un rapport fixe, au porte-satellite; le rotor du premier moteur est relié, de préférence avec un rapport fixe, au planétaire; le porte-satellite et le planétaire forment deux entrées du train épicycloïdal; la couronne forme une sortie du train épicycloïdal, la couronne est reliée, de préférence avec un rapport fixe, au plateau de sortie.

Dans un mode de réalisation de l'invention, l'axe du pédalier est engrené directement sur le premier élément d'engrenage, et/ou un rotor du deuxième moteur est engrené directement sur le premier élément d'engrenage, et/ou un rotor du premier moteur est solidaire du planétaire, et/ou le deuxième élément d'engrenage est engrené directement sur le plateau de sortie.

Dans un mode de réalisation de l'invention, l'unité de contrôle est agencée pour se baser en outre sur un paramètre de rapport de vitesse (GC) pour contrôler le premier moteur.

Dans un mode de réalisation de l'invention, l'unité de contrôle est agencée pour déterminer une consigne de vitesse de rotation et pour imposer ladite consigne de vitesse de rotation au premier moteur, la consigne de vitesse de rotation étant déterminée comme directement proportionnelle à la vitesse de rotation du deuxième moteur obtenue par l'élément de mesure de position angulaire du deuxième moteur et au paramètre de rapport de vitesse (GC).

Dans un mode de réalisation de l'invention, l'unité de contrôle se base en outre sur le paramètre de rapport de vitesse (GC) et le paramètre de niveau d'assistance (AF) du groupe motopropulseur pour contrôler le deuxième moteur.

Dans un mode de réalisation de l'invention, l'unité de contrôle est agencée pour déterminer une consigne de courant ou de couple et pour imposer ladite consigne de courant ou de couple au deuxième moteur, la consigne de courant ou de couple étant déterminée comme directement proportionnelle au couple ou courant du premier moteur obtenu par l'élément de mesure du courant du premier moteur et étant déterminée sur base du paramètre de rapport de vitesse du groupe motopropulseur (GC) et du paramètre de niveau d'assistance du groupe motopropulseur (AF).

Dans un mode de réalisation de l'invention, l'axe de pédalier et le premier élément d'engrenage sont reliés de façon à ce que le premier élément d'engrenage tourne plus vite que l'axe de pédalier.

Cela permet une démultiplication. Ainsi le train épicycloïdal subit peu de contraintes mécaniques car le couple est plus faible.

Dans un mode de réalisation de l'invention, le plateau de sortie et le deuxième élément d'engrenage sont reliés de façon à ce que le deuxième élément d'engrenage tourne plus vite que le plateau de sortie.

Cela permet une réduction. Ainsi, le train épicycloïdal est soumis à un couple relativement faible.

Dans un mode de réalisation de l'invention, le deuxième moteur est relié au premier élément d'engrenage de façon à ce que le premier élément d'engrenage tourne plus lentement qu'un rotor du deuxième moteur. Cela permet de diminuer le couple et augmenter la vitesse de rotation du rotor du deuxième moteur et donc de miniaturiser la taille du deuxième moteur.

Dans un mode de réalisation de l'invention, le groupe motopropulseur comprend en outre une carte de circuit imprimé et l'élément de mesure d'une position angulaire du premier moteur comprend un premier capteur, l'élément de mesure d'une position angulaire du deuxième moteur comprend un deuxième capteur, le premier capteur et le deuxième capteur étant préférentiellement disposés sur la carte de circuit imprimé.

La carte de circuit imprimé est de préférence plane.

De préférence, un premier aimant est situé à une extrémité de l'axe de rotation du rotor du premier moteur. Le premier capteur est de préférence disposé en face du premier aimant. Cela permet de facilement mesurer la position angulaire et/ou la vitesse angulaire du premier moteur.

De préférence, un deuxième aimant est situé à une extrémité de l'axe de rotation du rotor du deuxième moteur. Le deuxième capteur est de préférence disposé en face du deuxième aimant. Cela permet de facilement mesurer la position angulaire et/ou la vitesse angulaire du deuxième moteur.

Dans un mode de réalisation de l'invention, le groupe motopropulseur comprend en outre une première roue libre agencée pour permettre une transmission de puissance mécanique depuis l'axe de pédalier vers le plateau de sortie. Différentes positions sont possibles pour la première roue libre.

Une fonction de la première roue libre est de permettre une transmission de puissance purement mécanique depuis l'axe de pédalier vers le plateau de sortie, même si les moteurs ne fonctionnent pas. Ainsi, en cas de panne moteur, le cycliste peut ainsi toujours pédaler pour rentrer chez lui. De préférence, ce mode de fonctionnement correspond au plus petit rapport de transmission mécanique. Ce plus petit rapport de transmission mécanique est aussi utile lorsque le cycliste gravit une montée à forte pente.

Dans un mode de réalisation préférentiel de l'invention, la première roue libre est disposée, de préférence directement, entre l'axe de pédalier et le plateau de sortie, de manière à empêcher que le plateau de sortie tourne moins vite que l'axe de pédalier.

Cela permet d'éviter que l'axe de pédalier tourne plus vite que le plateau de sortie. En position bloquée, l'axe de pédalier entraine directement le plateau de sortie. En position libre, le plateau de sortie peut tourner plus vite que l'axe de pédalier. Cette position permet d'atteindre un premier rapport de vitesse du groupe motopropulseur particulièrement faible.

Dans un mode de réalisation de l'invention, la première roue libre est disposée entre la couronne et le porte-satellite, de manière à empêcher que le porte-satellite tourne plus lentement que la couronne.

Dans un mode de réalisation de l'invention, la première roue libre est disposée entre le rotor du premier moteur et un élément fixe par rapport au cadre du véhicule, de manière à empêcher le rotor du premier moteur de tourner dans une direction. L'élément fixe par rapport au cadre du véhicule est par exemple un carter du premier moteur ou du groupe motopropulseur.

Dans un mode de réalisation de l'invention, le groupe motopropulseur comprend en outre une deuxième roue libre agencée pour empêcher un entrainement de l'axe de pédalier par le deuxième moteur dans un direction de rotation correspondant à un mouvement vers l'avant du véhicule à pédales .

L'invention propose en outre un véhicule à pédales comprenant un groupe motopropulseur selon l'un des modes de réalisation de l'invention.

## Brève description des figures

D'autres caractéristiques et avantages de l'invention apparaîtront à la lecture de la description détaillée qui suit pour la compréhension de laquelle on se reportera aux figures annexées parmi lesquelles :

- la figure 1 illustre un groupe motopropulseur 1 selon une première variante d'un premier mode de réalisation de l'invention ;
- la figure 2 illustre une deuxième variante du premier mode de réalisation de l'invention ;
- la figure 3 illustre une troisième variante du premier mode de réalisation de l'invention ;
- la figure 4 illustre une quatrième variante du premier mode de réalisation de l'invention ;
- la figure 5 illustre un groupe motopropulseur selon un deuxième mode de réalisation de l'invention ; et
- la figure 6 illustre un autre exemple de groupe motopropulseur.

## Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

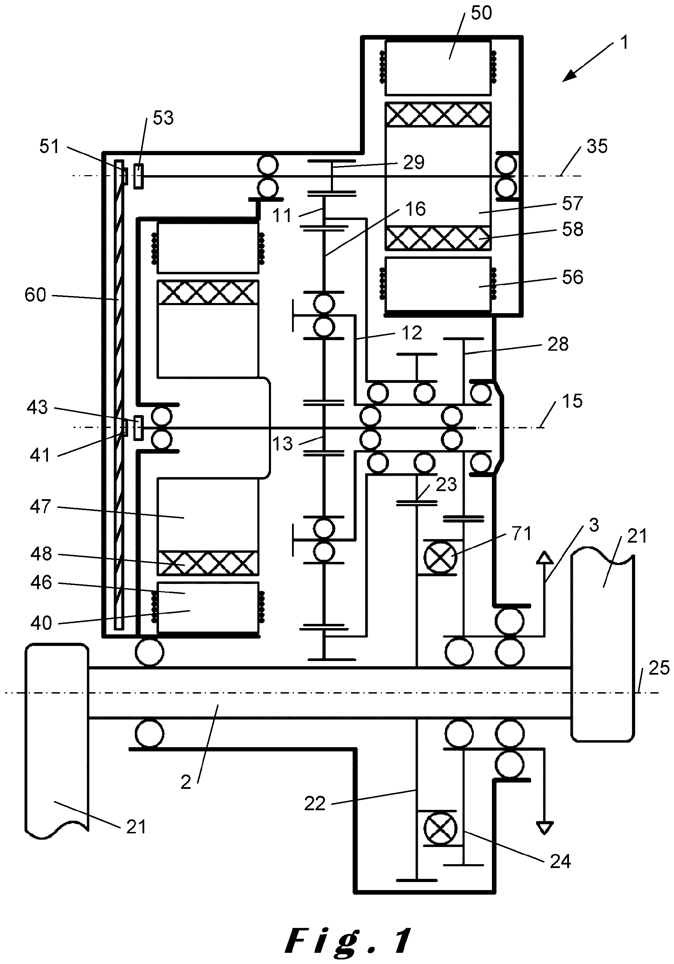

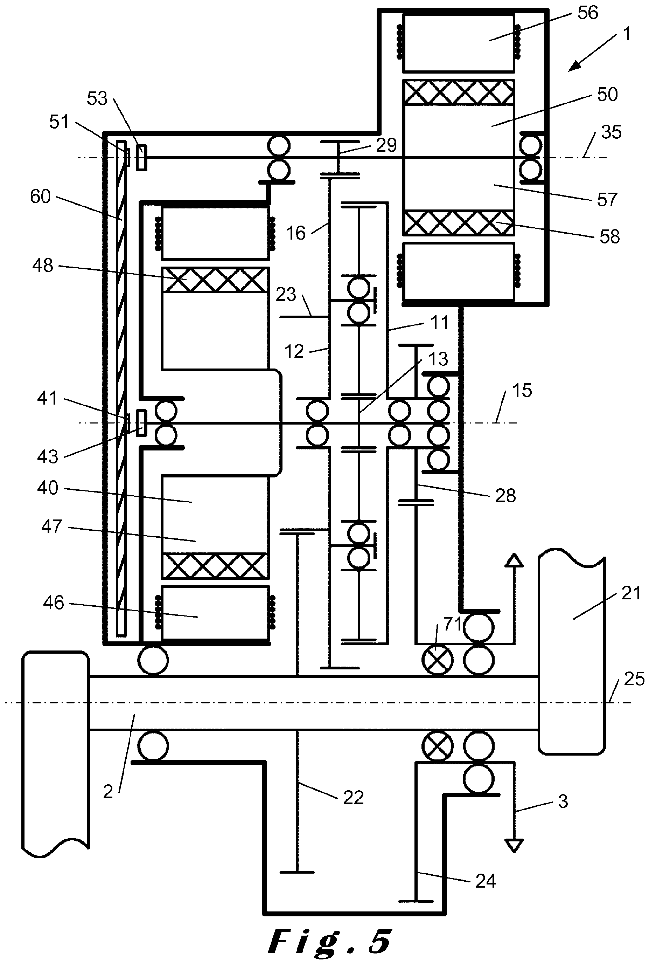

Les figures 1 à 4 illustrent un groupe motopropulseur 1 selon quatre variantes d'un premier mode de réalisation de l'invention. La figure 5 illustre un groupe motopropulseur 1 selon un deuxième mode de réalisation de l'invention.

Le groupe motopropulseur 1 comprend un axe de pédalier 2 et un plateau de sortie 3 de même axe de rotation 25. Cet axe peut être appelé premier axe de rotation 25. De préférence, l'axe de pédalier 2 est fixé à deux manivelles 21.

Le groupe motopropulseur 1 comprend un premier moteur 40 et un deuxième moteur 50. Le premier moteur 40 comprend un stator 46 et un rotor 47 qui comprend des aimants 48. Le rotor 47 est agencé pour tourner autour d'un deuxième axe de rotation 15. Le deuxième moteur 50 comprend un stator 56 et un rotor 57 qui comprend des aimants 58. Le rotor 57 est agencé pour tourner autour d'un troisième axe de rotation 35.

Le groupe motopropulseur 1 comprend un élément de mesure de courant du premier moteur 40 et un élément de mesure de courant du deuxième moteur 50.

Le groupe motopropulseur 1 comprend en outre une unité de contrôle, de préférence fixée à une carte de circuit imprimé 60. La circuit imprimé 60 est préférentiellement située perpendiculairement aux deuxième 15 et au troisième 35 axes de rotation.

Préférentiellement, un premier aimant 43 est fixé à une extrémité d'un arbre du premier moteur 40 et un deuxième aimant 53 est fixé à une extrémité d'un arbre du deuxième moteur 50.

De préférence, un premier capteur 41 est fixé à la carte de circuit imprimé 60, approximativement dans l'axe du deuxième axe de rotation 15. Le premier capteur 41 et le premier aimant 43 font partie d'un élément de mesure de position angulaire du premier moteur 40.

De préférence, un deuxième capteur 51 est fixé à la carte de circuit imprimé 60, approximativement dans l'axe du troisième axe de rotation 35. Le deuxième capteur 51 et le deuxième aimant 53 font partie d'un élément de mesure de position angulaire du deuxième moteur 50.

L'unité de contrôle contrôle le premier moteur 40 et le deuxième moteur 50 sur base de la position angulaire du premier moteur 40, de la position angulaire du deuxième moteur 50, du courant du premier moteur 40 et du courant du deuxième moteur 50, ces informations lui ayant été fournies par les éléments de mesures.

L'unité de contrôle contrôle le deuxième moteur 50 en courant ou en couple. L'unité de contrôle contrôle le premier moteur 40 en position angulaire ou en vitesse angulaire.

Le groupe motopropulseur 1 comprend un train épicycloïdal qui comprend un premier élément d'engrenage, un deuxième élément d'engrenage et un planétaire 13.

Dans le premier mode de réalisation de l'invention (figures 1 à 4), le premier élément d'engrenage est une couronne 11 et le deuxième élément d'engrenage est un porte-satellite 12. De préférence, le porte-satellite 12 comprend au moins un satellite 16. De préférence, la couronne 11 est engrenée sur au moins un satellite 16. De préférence, le planétaire 13 est engrené sur le au moins un satellite 16.

Dans un mode de réalisation de l'invention, une première roue dentée 22 est solidaire de l'axe de pédalier 2. La première roue dentée 22 est engrenée avec une deuxième roue dentée 23. La deuxième roue dentée 23 est solidaire de la couronne 11. De préférence, la première roue dentée 22 a un diamètre supérieur à celui de la deuxième roue dentée 23.

Dans un mode de réalisation de l'invention, une troisième roue dentée 24 est solidaire du plateau de sortie 3. La troisième roue dentée 24 est engrenée avec une quatrième roue dentée 28. La quatrième roue dentée 28 est solidaire du porte-satellite 12, de façon à tourner avec le porte-satellite 12. De préférence, la troisième roue dentée 24 a un diamètre supérieur à celui de la quatrième roue dentée 28.

Dans un mode de réalisation de l'invention, une cinquième roue dentée 29 est couplée, de préférence fixée, au rotor 57 du deuxième moteur 50, de façon à tourner avec ce rotor 57. La cinquième roue dentée 29 est engrenée avec la couronne 11.

En fonctionnement normal, le groupe motopropulseur selon le premier mode de réalisation de l'invention fonctionne de la façon suivante. L'axe de pédalier 2 et le deuxième moteur 50 entrainent la couronne 11. La couronne 11 est une première entrée du train épicycloïdal. Le premier moteur 40 entraine le planétaire 13, qui est une deuxième entrée du train épicycloïdal. La couronne 11 et le planétaire 13 entraine le porte-satellite 12, qui est une sortie du train épicycloïdal. Le porte-satellite 12 entraine le plateau de sortie 3.

De préférence, le groupe motopropulseur 1 selon l'invention comporte au moins une roue libre.

Dans les quatre variantes du premier mode de réalisation de l'invention illustrées aux figures 1 à 4, ainsi que dans le deuxième mode de réalisation de l'invention illustré à la figure 5, le groupe motopropulseur 1 comprend une première roue libre 71 ayant pour fonction de permettre une transmission de puissance purement mécanique depuis l'axe de pédalier 2 vers le plateau de sortie 3, même si les moteurs 40, 50 ne fonctionnent pas.

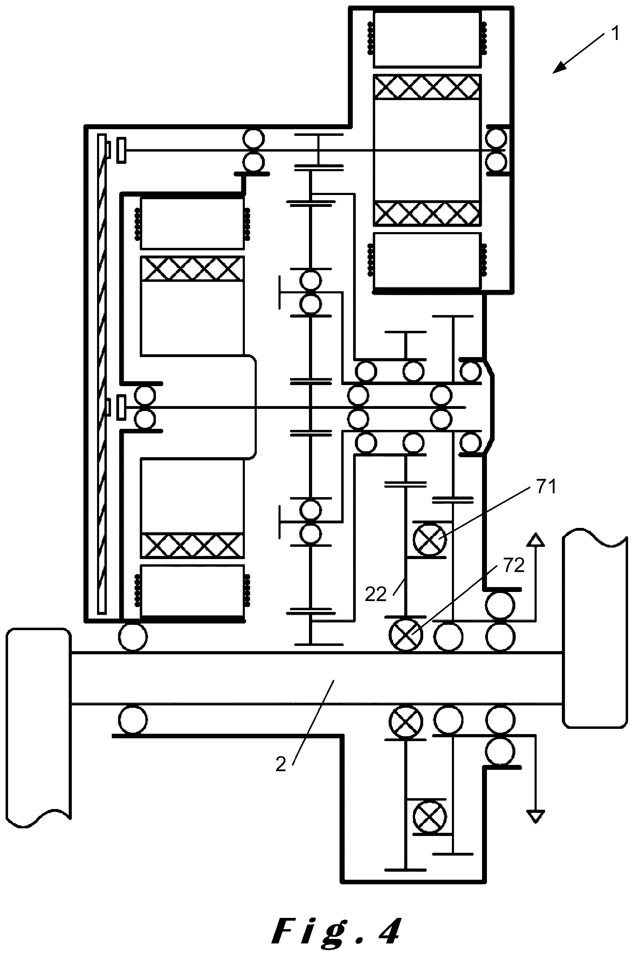

Dans la première variante du premier mode de réalisation de l'invention (figure 1) ainsi que dans la quatrième variante (figure 4), la première roue libre 71 est située entre l'axe de pédalier 2 et le plateau de sortie 3. Par exemple, la première roue libre 71 peut être située entre la première roue dentée 22 et la troisième roue dentée 24. En position bloquée, la roue libre 71 rend l'axe de pédalier 2 solidaire du plateau de sortie 3. En position libre, le plateau de sortie 3 est libre de tourner plus vite que l'axe de pédalier 2.

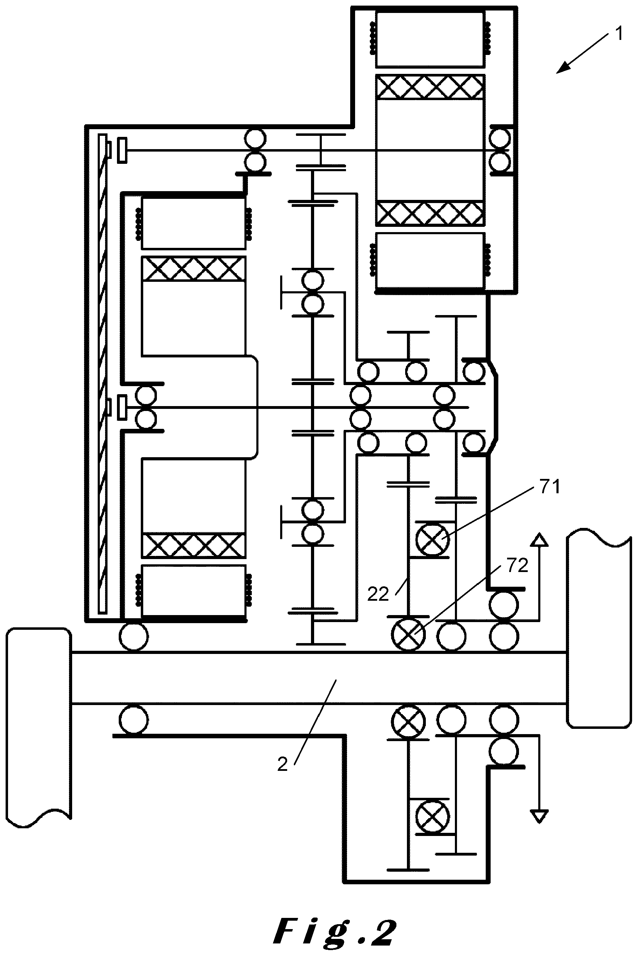

Dans la deuxième variante du premier mode de réalisation de l'invention (figure 2), la première roue libre 71 est située entre la couronne 11 et le porte-satellite 12. Elle permet ainsi d'éviter que le porte-satellite 12 tourne plus lentement que la couronne 11. En position bloquée, la roue libre 71 rend la couronne 11 solidaire du plateau du porte-satellite 12. En position libre, le porte-satellite 12 est libre de tourner plus vite que la couronne 11.

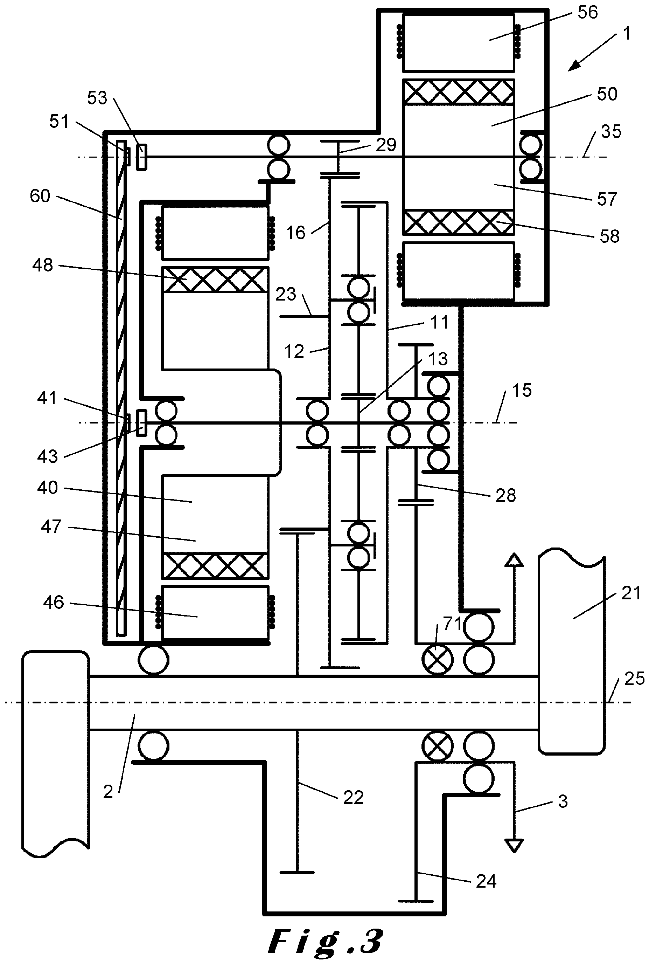

Dans la troisième variante du premier mode de réalisation de l'invention (figure 3), la première roue libre 71 est située entre le rotor 47 du premier moteur 40 et le carter 45 du groupe motopropulseur qui est fixé au cadre du véhicule. En position bloquée, la roue libre 71 rend le rotor 47 solidaire du carter 45. Le rotor 47 est donc bloqué à vitesse zéro. En position libre, le rotor 47 est libre de tourner plus vite que le carter 45.

En outre, il est possible que le groupe motopropulseur 1 selon l'invention comprenne une deuxième roue libre 72 ayant pour fonction d'empêcher que le deuxième moteur 50 ne puisse entrainer l'axe de pédalier 2 vers l'avant. Une position possible de la deuxième roue libre 72 est représentée à la figure 4. La deuxième roue libre 72 est compatible avec les différentes positions de la première roue libre 71 qui sont illustrées aux figures 1 à 3.

La deuxième roue libre 72 peut par exemple être située entre la première roue dentée 22 et l'axe de pédalier 2. La deuxième roue libre 72 entraine la première roue dentée 22 lorsque l'axe de pédalier 2 est actionné vers l'avant, mais la première roue dentée 22 ne peut pas entrainer l'axe de pédalier 2 vers l'avant.

La deuxième roue libre 72 offre plus de flexibilité de contrôle car, grâce à elle, le deuxième moteur 50 peut ainsi tourner sans actionner l'axe de pédalier 2. Cela permet, par exemple, d'utiliser la motorisation à l'aide d'un accélérateur, sans que le cycliste n'actionne le pédalier.

La figure 5 illustre un groupe motopropulseur 1 selon un deuxième mode de réalisation de l'invention. Le deuxième mode de réalisation de l'invention diffère principalement du première mode de réalisation de l'invention par l'agencement du train épicycloïdal. Les éléments identiques ou similaires aux figures 5 et 1 ne seront pas décrits en détails ci-après.

Dans le deuxième mode de réalisation de l'invention, le premier élément d'engrenage est un porte-satellite 12 et le deuxième élément d'engrenage est une couronne 11. De préférence, le porte-satellite 12 comprend au moins un satellite 16. De préférence, la couronne 11 est engrenée sur le au moins un satellite 16. De préférence, le planétaire 13 est engrené sur le au moins un satellite 16.

Dans le mode de réalisation illustré à la figure 5, une première roue dentée 22 est couplée, de préférence fixée, à l'axe de pédalier 2 de façon à tourner avec l'axe de pédalier 2. La première roue dentée 22 est engrenée avec une deuxième roue dentée 23. La deuxième roue dentée 23 est couplée, de préférence fixée, au porte-satellite 12 de façon à tourner avec le porte-satellite 12. De préférence, la première roue dentée 22 a un diamètre supérieur à celui de la deuxième roue dentée 23.

Dans le mode de réalisation illustré à la figure 5, une troisième roue dentée 24 est couplée, de préférence fixée, au plateau de sortie 3, ou à un arbre creux fixé au plateau de sortie 3, de façon à tourner avec le plateau de sortie 3. La troisième roue dentée 24 est engrenée avec une quatrième roue dentée 28. La quatrième roue dentée 28 est couplée, de préférence fixée, à la couronne 11, de façon à tourner avec la couronne 11. De préférence, la troisième roue dentée 24 a un diamètre supérieur à celui de la quatrième roue dentée 28.

En fonctionnement normal, le groupe motopropulseur selon le deuxième mode de réalisation de l'invention fonctionne de la façon suivante. L'axe de pédalier 2 et le deuxième moteur 50 entrainent le porte-satellite 12. Le porte-satellite 12 est une première entrée du train épicycloïdal. Le premier moteur 40 entraine le planétaire 13, qui est une deuxième entrée du train épicycloïdal. Le planétaire 13 entraine le porte-satellite 12. Le porte-satellite 12 entraine la couronne 11, qui est une sortie du train épicycloïdal. La couronne 11 entraine le plateau de sortie 3.

De préférence, le groupe motopropulseur 1 selon le deuxième mode de réalisation de l'invention comporte une roue libre 71 ayant pour fonction de permettre une transmission de puissance purement mécanique depuis l'axe de pédalier 2 vers le plateau de sortie 3, même si les moteurs 40, 50 ne fonctionnent pas. De préférence, la première roue libre 71 est située entre l'axe de pédalier 2 et le plateau de sortie 3. Il est aussi possible que la première roue libre 71 soit située entre le rotor du premier moteur 40 et le carter moteur du premier moteur 40.

En outre, le groupe motopropulseur 1 selon le deuxième mode de réalisation de l'invention peut comprendre une deuxième roue libre ayant pour fonction d'empêcher que le deuxième moteur 50 ne puisse entrainer l'axe de pédalier 2.

Il est intéressant de noter que l'agencement du groupe motopropulseur selon l'invention est compatible avec les variantes de groupes motopropulseur décrites dans le document WO2013/160477 ou avec d'autres variantes de groupes motopropulseurs connus.

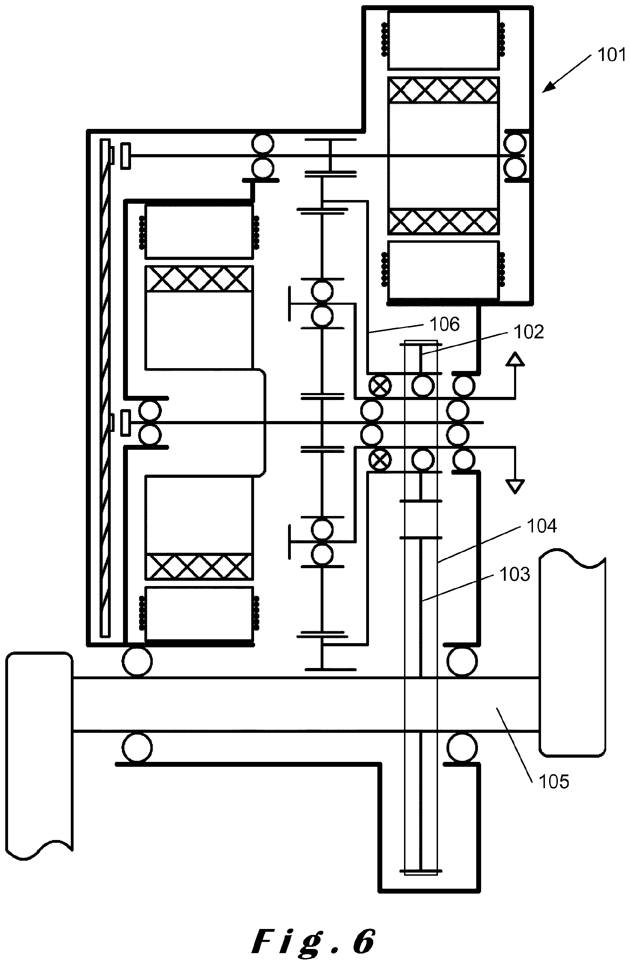

La figure 6 illustre un autre exemple de groupe motopropulseur 101. Celui-ci est très similaire au groupe motopropulseur décrit en référence à la figure 6 du document WO2016/034574. Une spécificité du groupe motopropulseur illustré à la figure 6 du présent document est que la connexion entre l'axe de pédalier 105 et le train épicycloïdal 106 se fait via une grande roue dentée 103 et une petite roue dentée 102 qui sont couplées via une courroie 104 ou une chaine.

En d'autres termes, l'invention se rapporte à un groupe motopropulseur 1 pour véhicule à pédales. Le groupe motopropulseur 1 comprend un axe de pédalier 2 et un plateau de sortie 3 tournant autour d'un premier axe de rotation 25. Le couplage entre l'axe de pédalier 2 et le plateau de sortie 3 passe par un train épicycloïdal comprenant une couronne 11, un porte-satellite 12 et un planétaire 13 qui tournent autour d'un deuxième axe de rotation 15 qui est décalé dans l'espace par rapport au premier axe de rotation 25.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits cidessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Groupe motopropulseur (1) pour un véhicule à pédales et comprenant:

    • un axe de pédalier (2) agencé de façon à tourner autour d'un premier axe de rotation (25),
    • un plateau de sortie (3) agencé de façon à tourner autour du premier axe de rotation (25),
    • un premier moteur (40),
    • un deuxième moteur (50),
    • un train épicycloïdal comprenant un premier élément d'engrenage, un deuxième élément d'engrenage et un planétaire (13),

    l'axe de pédalier (2) et le deuxième moteur (50) étant reliés au train épicycloïdal via le premier élément d'engrenage de façon à former une première entrée du train épicycloïdal,

    le premier moteur (40) étant relié au train épicycloïdal via le planétaire (13) de façon à former une deuxième entrée du train épicycloïdal,
    le deuxième élément d'engrenage reliant le train épicycloïdal au plateau de sortie (3) de façon à former une sortie du train épicycloïdal,
    dans lequel le premier élément d'engrenage, le deuxième élément d'engrenage et le planétaire (13) sont agencés de façon à tourner autour d'un même deuxième axe de rotation (15) différent du premier axe de rotation (25),
    comprenant en outre une première roue libre (71) agencée pour permettre une transmission de puissance mécanique depuis l'axe de pédalier (2) vers le plateau de sortie (3),
    et dans lequel la première roue libre (71) est disposée entre l'axe de pédalier (2) et le plateau de sortie (3), de manière à empêcher que le plateau de sortie (3) tourne moins vite que l'axe de pédalier (2).

**2.** Groupe motopropulseur (1) selon la revendication 1, dans lequel le premier élément d'engrenage est une couronne (11) du train épicycloïdal et le deuxième élément d'engrenage est un porte-satellite (12) du train épicycloïdal.

**3.** Groupe motopropulseur (1) selon la revendication 1, dans lequel le premier élément d'engrenage est un porte-satellite (12) du train épicycloïdal et le deuxième élément d'engrenage est une couronne (11) du train épicycloïdal.

**4.** Groupe motopropulseur (1) selon l'une quelconque des revendications précédentes, dans lequel l'axe du pédalier (2) est engrené directement sur le premier élément d'engrenage, et/ou un rotor du deuxième moteur (50) est engrené directement sur le premier élément d'engrenage, et/ou un rotor du premier moteur (40) est solidaire du planétaire (13), et/ou le deuxième élément d'engrenage est engrené directement sur le plateau de sortie (3).

**5.** Groupe motopropulseur (1) selon l'une quelconque des revendications précédentes, comprenant en outre une unité de contrôle agencée pour se baser en outre sur un paramètre de rapport de vitesse pour contrôler le premier moteur.

**6.** Groupe motopropulseur (1) selon la revendication précédente, dans lequel l'unité de contrôle est agencée pour déterminer une consigne de vitesse de rotation et pour imposer ladite consigne de vitesse de rotation au premier moteur (40), la consigne de vitesse de rotation étant déterminée comme directement proportionnelle à une vitesse de rotation du deuxième moteur (50) obtenue par l'élément de mesure de position angulaire du deuxième moteur (50) et au paramètre de rapport de vitesse.

**7.** Groupe motopropulseur (1) selon la revendication 5 ou 6, dans lequel dans lequel l'unité de contrôle se base en outre sur un paramètre de rapport de vitesse et un paramètre de niveau d'assistance du groupe motopropulseur pour contrôler le deuxième moteur (50).

**8.** Groupe motopropulseur (1) selon la revendication précédente, dans lequel l'unité de contrôle est agencée pour déterminer une consigne de courant ou de couple et pour imposer ladite consigne de courant ou de couple au deuxième moteur (50), la consigne de courant ou de couple étant déterminée comme directement proportionnelle à un couple ou courant du premier moteur (40) obtenu par l'élément de mesure du courant du premier moteur (40) et étant déterminée sur base du paramètre de rapport de vitesse du groupe motopropulseur et du paramètre de niveau d'assistance du groupe motopropulseur.

**9.** Groupe motopropulseur (1) selon l'une quelconque des revendications précédentes, dans lequel l'axe de pédalier (2) et le premier élément d'engrenage sont reliés de façon à ce que le premier élément d'engrenage tourne plus vite que l'axe de pédalier (2).

**10.** Groupe motopropulseur (1) selon l'une quelconque des revendications précédentes, dans lequel le plateau de sortie (3) et le deuxième élément d'engrenage sont reliés de façon à ce que le deuxième élément d'engrenage tourne plus vite que le plateau de sortie (3).

**11.** Groupe motopropulseur (1) selon l'une quelconque des revendications précédentes, dans lequel le deuxième moteur (50) est relié au premier élément d'engrenage de façon à ce que le premier élément d'engrenage tourne plus lentement que le rotor du deuxième moteur (50).

**12.** Groupe motopropulseur (1) selon l'une quelconque des revendications précédentes, comprenant en outre une deuxième roue libre (72) agencée pour empêcher un entrainement de l'axe de pédalier (2) par le deuxième moteur (50) dans un direction de rotation correspondant à un mouvement vers l'avant du véhicule à pédales.

**13.** Groupe motopropulseur (1) selon l'une quelconque des revendications précédentes, comprenant en outre au moins un parmi:

   • un élément de mesure de position angulaire du premier moteur (40),
   • un élément de mesure de position angulaire du deuxième moteur (50),
   • un élément de mesure de courant du premier moteur (40), et
   • un élément de mesure de courant du deuxième moteur (50).

**14.** Groupe motopropulseur (1) selon l'une quelconque des revendications 1 à 4, comprenant en outre une unité de contrôle connectée au premier moteur (40), au deuxième moteur (50), et agencée pour contrôler le premier moteur (40) et le deuxième moteur (50), de préférence sur base de la position angulaire du premier moteur (40), de la position angulaire du deuxième moteur (50), du courant du premier moteur (40) et du courant du deuxième moteur (50), l'unité de contrôle étant de préférence agencée pour contrôler le deuxième moteur (50) selon un contrôle en courant ou en couple et pour contrôler le premier moteur (40) selon un contrôle en position angulaire ou en vitesse angulaire.

15. Véhicule à pédale comprenant un groupe motopropulseur (1) selon l'une quelconque des revendications précédentes.

**Patentansprüche**

1. Antriebsstrang (1) für ein Tretfahrzeug und umfassend:

   - eine Tretlagerachse (2), die derart eingerichtet ist, dass sie sich um eine erste Drehachse (25) dreht,
   - eine Ausgangsscheibe (3), die derart eingerichtet ist, dass sie sich um die erste Drehachse (25) dreht,
   - einen ersten Motor (40),
   - einen zweiten Motor (50),
   - ein Umlaufwellengetriebe, das ein erstes Eingriffselement, ein zweites Eingriffselement und ein Planetenrad (13) umfasst,

   wobei die Tretlagerachse (2) und der zweite Motor (50) über das erste Eingriffselement derart mit dem Umlaufwellengetriebe verbunden sind, dass sie einen ersten Eingang des Umlaufwellengetriebes bilden,

   wobei der erste Motor (40) über das Planetenrad (13) derart mit dem Umlaufwellengetriebe verbunden ist, dass sie einen zweiten Eingang des Umlaufwellengetriebes bilden,
   wobei das zweite Eingriffselement das Umlaufwellengetriebe derart mit der Ausgangsscheibe (3) verbindet, dass sie einen Ausgang des Umlaufwellengetriebes bilden,
   wobei das erste Eingriffselement, das zweite Eingriffselement und das Planetenrad (13) derart eingerichtet sind, dass sie sich um eine selbe zweite Drehachse (15) drehen, die sich von der ersten Drehachse (25) unterscheidet,
   weiter umfassend ein erstes freies Rad (71), das eingerichtet ist, um eine mechanische Kraftübertragung von der Tretlagerachse (2) zu der Ausgangsscheibe (3) zu ermöglichen,
   und wobei das erste freie Rad (71) so zwischen der Tretlagerachse (2) und der Ausgangsscheibe (3) angeordnet ist, dass verhindert wird, dass sich die Ausgangsscheibe (3) weniger schnell dreht als die Tretlagerachse (2).

2. Antriebsstrang (1) nach Anspruch 1, wobei das erste Eingriffselement eine Krone (11) des Umlaufwellengetriebes ist und das zweite Eingriffselement ein Planetenträger (12) des Umlaufwellengetriebes ist.

3. Antriebsstrang (1) nach Anspruch 1, wobei das erste Eingriffselement ein Planetenträger (12) des Umlaufwellengetriebes ist und das zweite Eingriffselement eine Krone (11) des Umlaufwellengetriebes ist.

4. Antriebsstrang (1) nach einem der vorstehenden Ansprüche, wobei die Tretlagerachse (2) direkt mit dem ersten Eingriffselement in Eingriff steht und/oder ein Rotor des zweiten Motors (50) direkt mit dem ersten Eingriffselement in Eingriff steht und/oder ein Rotor des ersten Motors (40) fest mit dem Planetenrad (13) verbunden ist und/oder das zweite Eingriffselement direkt mit der Ausgangsscheibe (3) in Eingriff steht.

5. Antriebsstrang (1) nach einem der vorstehenden Ansprüche, weiter eine Steuereinheit umfassend, die derart eingerichtet ist, dass sie weiter auf einem Geschwindigkeitsverhältnisparameter basiert, um den ersten Motor zu steuern.

6. Antriebsstrang (1) nach dem vorstehenden Anspruch, wobei die Steuereinheit eingerichtet ist, um eine Solldrehzahl zu bestimmen und um dem ersten Motor (40) die Solldrehzahl vorzuschreiben, wobei die Solldrehzahl als direkt proportional zu einer Drehzahl des zweiten Motors (50), die von dem Messelement der Winkelposition des zweiten Motors (50) erhalten wird, und zu dem Geschwindigkeitsverhältnisparameter bestimmt wird.

7. Antriebsstrang (1) nach Anspruch 5 oder 6, wobei die Steuereinheit weiter auf einem Geschwindigkeitsverhältnisparameter und einem Unterstützungsstufenparameter des Antriebsstrangs zum Steuern des zweiten Motors (50) basiert.

**8.** Antriebsstrang (1) nach dem vorstehenden Anspruch, wobei die Steuereinheit eingerichtet ist, um einen Sollstrom oder ein Solldrehmoment zu bestimmen und um dem zweiten Motor (50) den Sollstrom oder das Solldrehmoment vorzuschreiben, wobei der Sollstrom oder das Solldrehmoment als direkt proportional zu einem Drehmoment oder Strom des ersten Motors (40) bestimmt wird, der von dem Strommesselement des ersten Motors (40) erhalten wird, und auf Basis des Geschwindigkeitsverhältnisparameters des Antriebsstrangs und des Unterstützungsstufenparameters des Antriebsstrangs bestimmt wird.

**9.** Antriebsstrang (1) nach einem der vorstehenden Ansprüche, wobei die Tretlagerachse (2) und das erste Eingriffselement derart verbunden sind, dass sich das erste Eingriffselement schneller dreht als die Tretlagerachse (2).

**10.** Antriebsstrang (1) nach einem der vorstehenden Ansprüche, wobei die Ausgangsscheibe (3) und das zweite Eingriffselement derart verbunden sind, dass sich das zweite Eingriffselement schneller dreht als die Ausgangsscheibe (3).

**11.** Antriebsstrang (1) nach einem der vorstehenden Ansprüche, wobei der zweite Motor (50) derart mit dem ersten Eingriffselement verbunden ist, dass sich das erste Eingriffselement langsamer dreht als der zweite Motor (50).

**12.** Antriebsstrang (1) nach einem der vorstehenden Ansprüche, weiter ein zweites freies Rad (72) umfassend, das eingerichtet ist, um ein Antreiben der Tretlagerachse (2) durch den zweiten Motor (50) in einer Drehrichtung, die einer Vorwärtsbewegung des Tretfahrzeugs entspricht, zu verhindern.

**13.** Antriebsstrang (1) nach einem der vorstehenden Ansprüche, weiter mindestens eines umfassend aus:

- einem Messelement der Winkelposition des ersten Motors (40),
- einem Messelement der Winkelposition des zweiten Motors (50),
- einem Strommesselement des ersten Motors (40), und
- ein Strommesselement des zweiten Motors (50).

**14.** Antriebsstrang (1) nach einem der Ansprüche 1 bis 4, weiter eine Steuereinheit umfassend, die an den ersten Motor (40), den zweiten Motor (50) angeschlossen und eingerichtet ist, um den ersten Motor (40) und den zweiten Motor (50) zu steuern, vorzugsweise auf Basis der Winkelposition des ersten Motors (40), der Winkelposition des zweiten Motors (50), des Stroms des ersten Motors (40) und des Stroms des zweiten Motors (50), wobei die Steuereinheit vorzugsweise eingerichtet ist, um den zweiten Motor (50) gemäß einer Strom- oder Drehmomentsteuerung zu steuern und um den ersten Motor (40) gemäß einer Winkelposition- oder Winkelgeschwindigkeitssteuerung zu steuern.

**15.** Tretfahrzeug, das einen Antriebsstrang (1) nach einem der vorstehenden Ansprüche umfasst.

**Claims**

**1.** Powertrain (1) for a pedal vehicle and comprising:

- • a crank axle (2) arranged so as to rotate around a first rotation axis (25),
- • an output sprocket (3) arranged so as to rotate around the first rotation axis (25),
- • a first motor (40),
- • a second motor (50),
- • an epicyclic gearset including a first gearing element, a second gearing element and a sun gear (13),

the crank axle (2) and the second motor (50) being connected to the epicyclic gearset via the first gearing element so as to form a first input of the epicyclic gearset,

the first motor (40) being connected to the epicyclic gearset via the sun gear (13) so as to form a second input of the epicyclic gearset,

the second gearing element connecting le epicyclic gearset to the output sprocket (3) so as to form an output of the epicyclic gearset,

wherein the first gearing element, the second gearing element and the sun gear (13) are arranged so as to rotate around a same second rotation axis (15) different from the first rotation axis (25),

further comprising a first one-way clutch (71) arranged to allow a mechanical power transmission from the crank axle (2) to the output sprocket (3), and

wherein the first one-way clutch (71) is located between the crank axle (2) and the output sprocket (3), in such a way to prevent the output sprocket (3) from rotating slower than the crank axle (2).

2.  Powertrain (1) according to claim 1, wherein the first gearing element is a ring gear (11) of the epicyclic gearset and the second gearing element is a planet carrier (12) of the epicyclic gearset.

3.  Powertrain (1) according to claim 1, wherein the first gearing element is a planet carrier (12) of the epicyclic gearset and the second gearing element is a ring gear (11) of the epicyclic gearset.

4.  Powertrain (1) according to any one of the previous claims, wherein the crank axle (2) is directly meshed with the first gearing element, and/or a rotor of the second motor (50) is directly meshed with the first gearing element, and/or a rotor of the first motor (40) is attached in a fixed manner to the sun gear (13), and/or the second gearing element is directly meshed with the output sprocket (3).

5.  Powertrain (1) according to any one of the previous claims, comprising a control unit configured to furthermore use a speed ratio parameter to control the first motor.

6.  Powertrain (1) according to the previous claim, wherein the control unit is configured to determine a rotation speed setpoint and to impose said rotation speed setpoint to the first motor (40), the rotation speed setpoint being determined as directly proportional to a rotation speed of the second motor (50) acquired by the element of measurement of angular position of the second motor (50) and to a speed ratio parameter.

7.  Powertrain (1) according to claim 5 or 6, wherein the control unit furthermore uses a speed ratio parameter and an assistance level parameter of the powertrain to control the second motor (50).

8.  Powertrain (1) according to the previous claim, wherein the control unit is configured to determine a current or torque setpoint and to impose said current or torque setpoint to the second motor (50), the current or torque setpoint being determined as directly proportional to a torque or current of the first motor (40) acquired by the element of measurement of a current of the first motor (40) and being determined based on the speed ratio parameter of the powertrain and on the assistance level parameter of the powertrain.

9.  Powertrain (1) according to any one of the previous claims, wherein the crank axle (2) and the first gearing element are connected in such a way that the first gearing element rotates faster than the crank axle (2).

10.  Powertrain (1) according to any one of the previous claims, wherein the output sprocket (3) and the second gearing element are connected in such a way that the second gearing element rotates faster than the output sprocket (3).

11.  Powertrain (1) according to any one of the previous claims, wherein the second motor (50) is connected to the first gearing element in such a way that the first gearing element rotates slower than le rotor of the second motor (50).

12.  Powertrain (1) according to any one of the previous claims, comprising furthermore a second one-way clutch (72) arranged to prevent a driving of the crank axle (2) by the second motor (50) in a rotation direction corresponding to forward movement of the pedal vehicle.

13.  Powertrain (1) according to any one of the previous claims, further comprising at least one amongst:

    • an element of measurement of an angular position of the first motor (40),
    • an element of measurement of an angular position of the second motor (50),
    • an element of measurement of a current of the first motor (40), and
    • an element of measurement of a current of the second motor (50).

14.  Powertrain (1) according to any one of claims 1 to 4, further comprising a control unit connected to the first motor (40), to the second motor (50), and configured to control the first motor (40) and the second motor (50), preferably according to the angular position of the first motor (40), to the angular position of the second motor (50), to the current of the first motor (40), and to the current of the second motor (50), the control unit being preferably configured to control the second motor (50) according to a current control or to torque control and to control the first motor (40) according to an angular position control or an angular speed control.

15. Pedal vehicle comprising a powertrain (1) according to any one of the previous claims.

*Fig.1*

**Fig.2**

*Fig.3*

**Fig. 4**

*F i g . 5*

**Fig. 6**

**EP 3 676 166 B1**

## RÉFÉRENCES CITÉES DANS LA DESCRIPTION

**Documents brevets cités dans la description**

- WO 2016034574 A
- DE 102017201325 A1
- WO 2013160477 A